# EUROPEAN PATENT SPECIFICATION

(11) **EP 2 723 053 B1**
(45) Date of publication and mention of the grant of the patent: **13.03.2019**
(21) Application number: 11867601.4
(22) Date of filing: 18.10.2011
(51) Int. Cl.: H04M 3/58, H04L 29/06

(54) **TRANSFER INQUIRY METHOD, APPLICATION SERVER, SERVICE TERMINAL, AND SYSTEM**
TRANSFERANFRAGEVERFAHREN, ANWENDUNGSSERVER, DIENSTENDGERÄT UND SYSTEM
PROCÉDÉ DE DEMANDE DE TRANSFERT, SERVEUR D'APPLICATIONS, TERMINAL DE SERVICE ET SYSTÈME

(30) Priority: 17.06.2011 CN 201110164386
(43) Date of publication of application: 23.04.2014
(73) Proprietor: ZTE Corporation, Shenzhen, Guangdong 518057 (CN)
(72) Inventor: QU, Tianxi, Shenzhen Guangdong 518057 (CN)
(74) Representative: Müller-Boré & Partner Patentanwälte PartG mbB
(86) International application number: PCT/CN2011/080953
(87) International publication number: WO 2012/171290

(56) References cited:
- EP-A1- 2 117 219
- CN-A- 101 183 960
- CN-A- 101 217 600
- CN-A- 101 217 601
- CN-A- 101 227 526
- CN-A- 101 316 383
- US-A1- 2004 176 084
- US-A1- 2005 083 948
- US-A1- 2006 159 251
- US-A1- 2007 165 605

## Description

### Technical Field

The present invention relates to the field of communications, and in particular, to a consultant transfer method, application server, service terminal and system.

### Background

Consultant transfer is a post-conversation handover service, the meaning of which is that after any user A is in conversation with a service user B, the user B places the user A on hold and calls a user C, C hooks off, and after B and C are in conversation, B inquiries whether the user C agrees to be in conversation with the user A, if C does not agree, then C exits, B and A continue to be in conversation, and if C agrees, then B exits, and the user C and the user A are enabled to have a conversation.

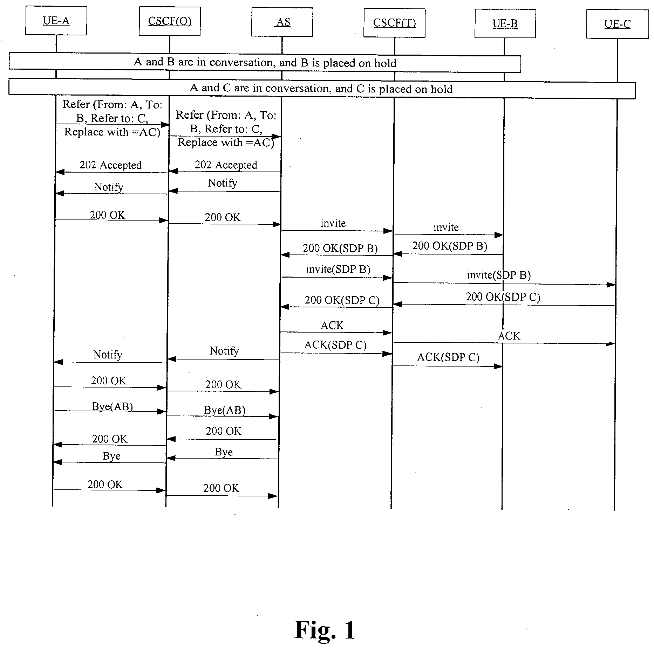

However, most of the current consultant transfer technologies are realized by an IP Multimedia Subsystem (IMS) network. In this manner, a terminal is required to possess the capability of sending a REFER (reference) message. Referring to a signaling interaction schematic diagram of a consultant transfer method shown in Fig. 1, A and B are in conversation, and after B is placed on hold, A and C are in conversation, and C is placed on hold, then A sends a REFER message to a Call Session Control Function (CSCF) entity in the network, and the CSCF entity triggers an application server (AS) to complete the conversation between B and C. This technology requires the terminal of the call transfer operator to support the sending of REFER messages and can only be realized in the IMS network, which thus greatly limits the application of the consultant transfer service.

Regarding the problem of the high limitation of the consultant transfer service in the related art, no effective solution is proposed currently

Documents US2007/165605 A1 and US2005/083948 A1 provide related technical solutions. Specifically, US 2007/165605 provides a method for performing an attended call transfer: the MS collects party C's number and communicates it to the AS; the AS causes party C's phone to ring; the AS also causes the MS to play an audible ringing announcement to party A; when the AS receives an indication that party C has answered, the AS causes the MS to stop playing the audible ringing announcement to party A; the AS then establishes a call between party A and party C; after receiving an indication from the SIPGW that party A has hung up, the AS determines whether the MS has been playing media to party B while on hold and the AS causes the MS to stop playing median to party B; finally the AS establishes a call between party B and party C. However, the above mentioned problem still remains unsolved.

### Summary

The present invention provides a consultant transfer method, application server, service terminal and system, so as to at least solve the above-mentioned problem of high limitation of the consultant transfer service.

According to one aspect of the present invention, a consultant transfer method is provided, including: an application server forwarding conversation negotiation signaling between a service user equipment (hereinafter referred to as 'user') and a target user, wherein the service user is a user subscribing to a consultant transfer service, and the service user is in a conversation holding state with a first user; the conversation negotiation signaling carries a consultant transfer service identifier; according to the consultant transfer service identifier, the application server determining, after receiving a conversation hang-up request from the service user, that the target user agrees to establish a conversation with the first user; the application server transferring a conversation of the first user to the target user; wherein service identifier, the application server determining, after receiving a conversation hang-up request from the service user, that the target user agrees to establish a conversation with the first user; the application server transferring a conversation of the first user to the target user.

In the method, the application server forwarding the conversation negotiation signaling between the service user and the target user includes: the application server receiving a call request message sent by the service user to the target user, wherein the call request message carries a consultant transfer service code and a number of the target user; the application server extracting the consultant transfer service code and the number of the target user from the call request message, recording the consultant transfer service code and calling the target user.

In the method, the consultant transfer service code is added in a specific the application server forwarding the conversation negotiation signaling between the service user and the target user includes: the application server receiving a call request message sent by the service user to the target user, wherein the call request message carries a consultant transfer service code and a number of the target user; the application server extracting the consultant transfer service code and the number of the target user from the call request message, recording the consultant transfer service code and calling the target user.

In the method, the consultant transfer service code is added in a specific location of a field where the number of the target user is located.

In the method, the application server transferring the conversation of the first user to the target user includes: the application server cutting off the conversation between the service user and the target user and the conversation between the service user and the first user and establishing a conversation connection between the first user and the target user.

According to another aspect of the present invention, a consultant transfer method is provided, including: during a conversation between a service user and a first user, the service user placing the first user in a conversation holding state, wherein the service user is a user subscribing to a consultant transfer service; the service user performing conversation negotiation with a target user and notifying an application server that the conversation negotiation is consultant transfer service negotiation; when the service user determines that the target user agrees a transfer service according to a result of the conversation negotiation, the service user respectively hanging up conversations with the first user and the target user to trigger the application server to transfer a conversation of the first user to the target user; wherein the service user performing the conversation negotiation with the target user and notifying the application server that the conversation negotiation is consultant transfer service negotiation includes: the service user sending a call request message to the target user, wherein the call request message carries a consultant transfer service code for notifying the application server that the conversation negotiation is consultant transfer service negotiation; after entering a conversation state with the target user, the service user sending a conversation hang-up request to the application server, wherein the conversation hang-up request is used for indicating the result of the conversation negotiation is that the target user agrees the transfer service

In the method, the consultant transfer service code is added in a specific location of a field where a number of the target user is located.

In the method, the consultant transfer service code is added in a specific location of a field where a number of the target user is located.

According to still another aspect of the present invention, an application server is provided, including: a signaling forwarding module configured to forward conversation negotiation signaling between a service user and a target user, wherein the service user is a user subscribing to a consultant transfer service, and the service user is in a conversation holding state with a first user; the conversation negotiation signaling carries a consultant transfer service identifier; a transfer determination module configured to, according to the consultant transfer service identifier, determine, after receiving a conversation hang-up request from the service user, that the target user agrees to establish a conversation with the first user; a conversation transfer module configured to transfer a conversation of the first user to the target user according to a determination result of the transfer determination module; wherein the signaling forwarding module includes: a call request receiving unit configured to receive a call request message sent by the service user to the target user, wherein the call request message carries a consultant transfer service code and a number of the target user; a call unit configured to extract the consultant transfer service code and the number of the target user from the call request message, record the consultant transfer service code and call the target user.

According to still another aspect of the present invention, a service user equipment is provided, including: a conversation holding module configured to, during a conversation between a service terminal and a first user, place the first user in a conversation holding state, wherein the service terminal is a terminal subscribing to a consultant transfer service; a negotiation module configured to perform conversation negotiation with a target user and notify an application server that the conversation negotiation is consultant transfer service negotiation; a transfer triggering module configured to, when determining that the target user agrees a transfer service according to a result of the conversation negotiation, respectively hang up conversations with the first user and the target user to trigger the
application server to transfer a conversation of the first user to the target user; wherein the negotiation module includes: a call request sending unit configured to send a call request message to the target user, wherein the call request message carries a consultant transfer service code for notifying the application server that the conversation negotiation is consultant transfer service negotiation; an inquiry unit configured to, after entering a conversation state with the target user, sending a conversation hang-up request to the application server, wherein the conversation hang-up request is used for indicating the result of the conversation negotiation is that the target user agrees the transfer service.

According to still another aspect of the present invention, a consultant transfer system is provided, including the above application server and the above service terminal.

By means of the present invention, during the negotiation conversation process of a service user and a target user, an application server is notified that a consultant transfer service is undergoing, the consultant transfer service can be realized without requiring a service terminal to support REFER messages, the problem of the high limitation of the consultant transfer service is solved, the application scope of the consultant transfer service is increased, and the system features are enhanced.

### Brief Description of the Drawings

Drawings, provided for further understanding of the present invention and forming a part of the specification, are used to explain the present invention together with embodiments of the present invention rather than to limit the present invention. In the drawings:
Fig. 1 is a signaling interaction schematic diagram of a consultant transfer method according to related art;
Fig. 2 is a flowchart of a consultant transfer method at the application server side according to embodiment 1 of the present invention;
Fig. 3 is a flowchart of a consultant transfer method at the service tenninal side according to embodiment 1 of the present invention;
Fig. 4 is a flowchart of a consultant transfer method according to embodiment 1 of the present invention;
Fig. 5 is a structural schematic diagram of a network system according to embodiment 1 of the present invention;
Fig. 6 is a signaling interaction schematic of a consultant transfer method according to embodiment 1 of the present invention;
Fig. 7 is a structure diagram of an application server according to embodiment 2 of the present invention;
Fig. 8 is a structural schematic diagram of a service terminal according to embodiment 2 of the present invention;
Fig. 9 is a structural block diagram of a consultant transfer system according to embodiment 2 of the present invention.

### Detailed Description of the Embodiments

The present invention is described below with reference to the accompanying drawings and embodiments in detail. Note that, the embodiments of the present invention and the features of the embodiments can be combined with each other if there is no conflict.

The embodiments of the present invention provide a consultant transfer method, application server, service terminal and system. In the above technology, a tenninal is not required to support REFER messages, and this technology can be applied in communication networks such as NGN (Next Generation Network) and IMS networks and so on.

### Embodiment 1

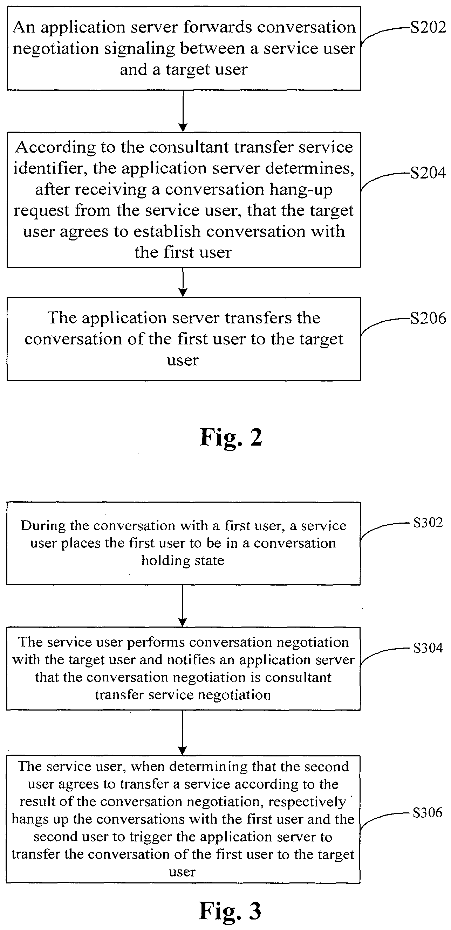

This embodiment provides a consultant transfer method, which method is described from the application server side, and referring to Fig. 2, this method includes the following steps.

In Step S202, an application server forwards conversation negotiation signaling between a service user and a target user, wherein the service user is a user subscribing to the consultant transfer service, and the service user is in a conversation holding state with a first user; the conversation negotiation signaling in this embodiment carries a consultant transfer service identifier so as to notify the application server that the negotiation process is a consultant transfer service process.

There may be a plurality of conversation negotiation signaling between the service user and the target user, for example, call request (INVITE message) upon calling, call request response message (200 OK response message, i.e., 200 success response (OK)) and conversation release request (BYE request) and so on. The service user may carry the consultant transfer service identifier in any one message that it sends, and based on this, the application server may forward the conversation negotiation signaling between the service user and the target user in the following manner: the application server receives a call request message sent by the service user to the target user, the call request message carrying a consultant transfer service code and a number of the target user; the application server extracts the consultant transfer service code and the number of the target user from the call request message, records the consultant transfer service code and calls the target user.

The consultant transfer service code may be added in a specific location of the field where the number of the target user is located, for example, the consultant transfer service code is added before or after the number of the target user.

In Step S204, according to the consultant transfer service identifier, the application server determines, after receiving a conversation hang-up request from the service user, that the target user agrees to establish conversation with the first user.

After being in conversation with the target user, the service user inquiries whether the target user agrees to establish a conversation with the first user, and if the target user agrees, then the service user will send a conversation hang-up request to the application server.

In Step S206, the application server transfers the conversation of the first user to the target user, for example, the application server cuts off the conversation between the service user and the target user and the conversation between the service user and the first user and establishes a conversation connection between the first user and the target user.

In this embodiment, during the negotiation conversation process of a service user and a target user, an application service is notified that a consultant transfer service is undergoing, the consultant transfer service can be realized without requiring a service terminal to support REFER messages, the problem of the high limitation of the consultant transfer service is solved, the application scope of the consultant transfer service is increased, and the system features are enhanced.

This embodiment also provides a consultant transfer method, which method is described from the service user side, and referring to Fig. 3, this method includes the following steps.

In step S302, during the conversation with a first user, a service user places the first user in a conversation holding state, wherein the service user is a user subscribing to a consultant transfer service.

In Step S304, the service user performs conversation negotiation with the first user and notifies an application server that the conversation negotiation is consultant transfer service negotiation.

There may be a plurality of conversation negotiation signaling between the service user and the target user, for example, call request (INVITE message) upon calling, call request response message (200 OK response message) and conversation release request (BYE request) and so on. The service user may carry the consultant transfer service identifier in any one message that it sends, for example, in the call request message sent by the service user to the target user, the call request message carrying a consultant transfer service code for notifying the application server that the conversation negotiation is consultant transfer service negotiation; after entering a conversation state with the target user, the service user inquiries whether the target user agrees to be in conversation with the first user.

The consultant transfer service code may be added in a specific location of the field where the number of the target user is located, for example, the consultant transfer service code is added before or after the number of the target user.

In Step S306, when determining that the second user agrees to transfer a service according to the result of the conversation negotiation, the service user respectively hangs up the conversations with the first user and the second user to trigger the application server to transfer the conversation of the first user to the target user.

In this embodiment, during the negotiation conversation process of a service user and a target user, an application service is notified that a consultant transfer service is undergoing, the consultant transfer service can be realized without requiring a service terminal to support REFER messages, the problem of the high limitation of the consultant transfer service is solved, the application scope of the consultant transfer service is increased, and the system features are enhanced.

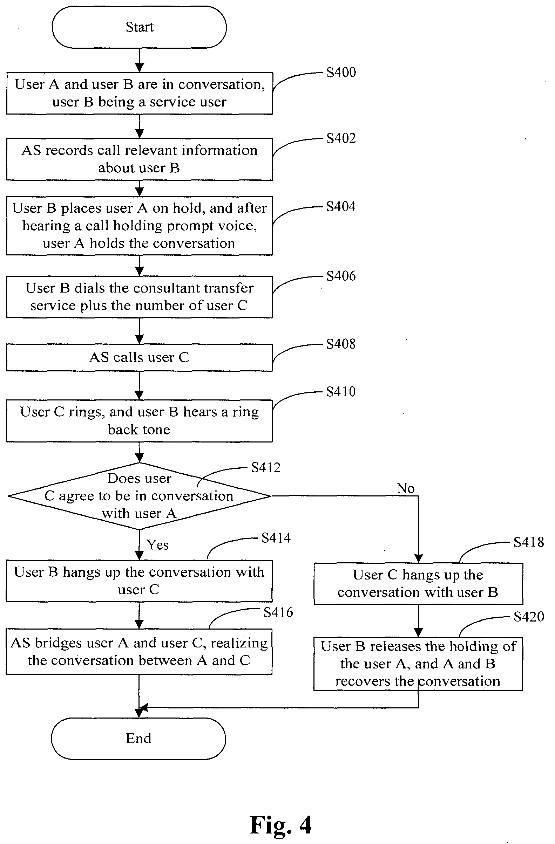

Hereinafter, taking the case where the consultant transfer function is realized among the users A, B and C as an example to describe the above-mentioned consultant transfer method, referring to the flowchart of the consultant transfer method shown in Fig. 4, the method includes the following steps.

Step S400, the user A and the user B are in conversation, wherein the user A may be any user, the user B is a service user, and the user B may be a calling party or a called party.

Step S402, an AS records the call relevant information about the user B.

Step S404, the user B places the user A on hold, and after hearing the call holding prompt voice, the user A holds the conversation.

Step S406, the user B dials the consultant transfer service code and the number of the user C, wherein the user C may be any user.

Step S408, the AS receives a call request from the user B and calls the user C after removing the consultant transfer service code.

Step S410, the user C rings, and the user B hears the ring back tone.

Step S412, the user C hooks off, the user B and the user C are in conversation, the user B inquiries whether the user C agrees to be in conversation with the user A, and if yes, then Step S414 is performed, otherwise, Step S418 is performed.

Step S414, the user B hangs up the conversation with the user C.

Step S416, the AS bridges the user C and the user A, thus realizing the conversation between the user C and the user A.

Step S418, the user C hangs up the conversation with the user B.

Step S420, the user B recovers the conversation with the user A, and notifies the user A that it cannot be transferred to the user C.

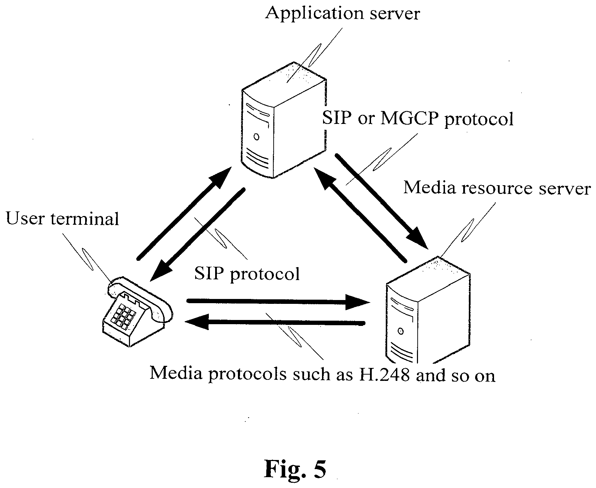

The above-mentioned consultant transfer method can be applied in the system shown in Fig. 5, where the function of each network element is described as follows:
User equipment (UE in short): a device for a user to initiate a call, answer a call and do other call operations, such as C network or G network mobile phone, PSTN (Public Switched Telephone Network) terminal, IMS terminal and so on.

Application server (AS): providing an underlying service capability, functions such as call control, state reporting, call ticket generation, and so on.

Media resource server (MRS): providing a voice media capability, which is generally a media server (i.e. MS), such as playing a call holding prompt voice for the held user during the call holding process and so on.

The protocols used by the above-mentioned various network elements are as follows.

What is between the AS and the MRS or the UE is call conversation media negotiation, wherein the AS and the UE intercommunicate with each other using the SIP (Session Initiation Protocol) protocol via the core network; and the AS and the IMS usually use the SIP or MGCP (Media Gateway Control Protocol), depending on the protocol type supported by the MRS.

What is between the UE and the MRS is media stream transmission, wherein the codec format of specific media packets, the transceiving ports, the bandwidth transmission rate and so on of the UE and the MRS are performed according to the media negotiation between the terminal and the MRS upon calling.

It should be noted that Fig. 5 is merely an overview, which hides the topology of the IMS network or the NGN network, and during practical implementation, the AS, MRS and UE are accessed or anchored to the IMS network or the NGN network.

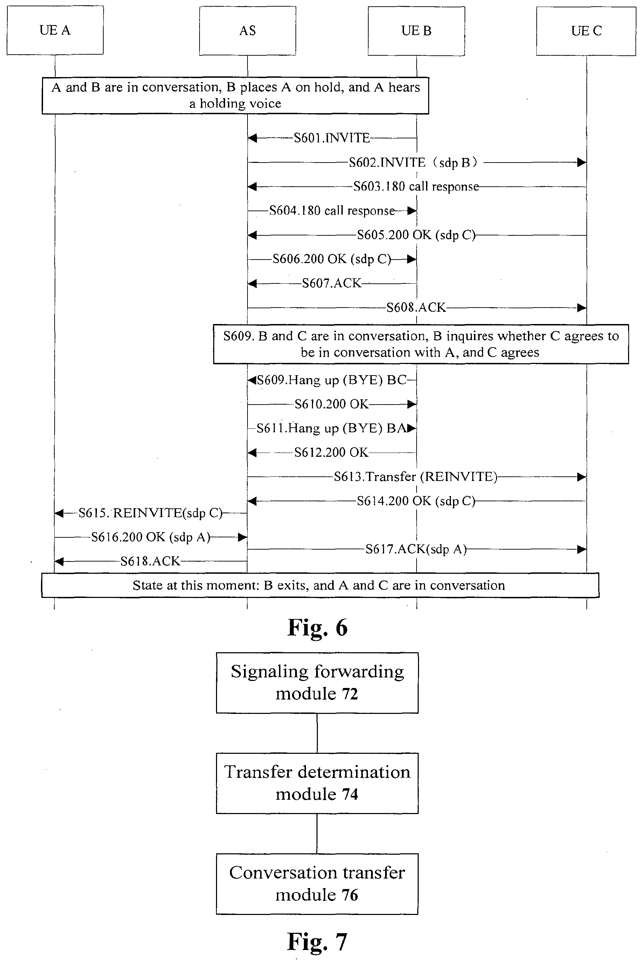

In the signaling interaction schematic diagram of a consultant transfer method shown in Fig. 6, for the clarity of description, only the AS is mentioned at the network side. In the example, UE A may be any user, UE B is a service user, which service user has subscribed to the consultant transfer service, and UE C may be any user. Before inquiry, UE A and UE B are in conversation, UE B places UE A on hold, and after hearing the call holding prompt voice, UE A holds the conversation. The implementation signaling flow of consultant transfer is as follows.

Step S601, UE B sends an INVITE (call) request to the AS, the number of which request is the consultant transfer service code (ac) plus the number (c) of UE C and carries the media information (sdp B) about UE B, such as the IP address, context description information and so on of UE B.

Step S602, the A sends the INVITE request to UE C, carrying the media information about UE B.

Step S603, UE C rings and returns a 180 response, i.e. call response message, of the INVITE to the AS.

Step S604, the AS returns the 180 response of the INVITE to UE B, and UE B hears the ring back tone.

Step S605, UE C hooks off and returns a 200 OK response (i.e., call answer message) of the INVITE to the AS, carrying the media information about UE C.

Step S606, the AS returns the 200 OK response of the INVITE to UE B, carrying the media information about UE C.

Step S607, UE B sends ACK acknowledgement information to the AS, not carrying media information.

Step S608, the AS sends the ACK acknowledgement information to UE C, not carrying media information. The negotiation between UE B and UE C is completed, entering a conversation state.

Step S609, UE B inquiries whether UE C agrees to be in conversation with UE A, and if UE C agrees, then UE B sends a BYE request (i.e., conversation hang-up request) to the AS, ending the conversation with UE C.

Step S610, the AS returns a 200 OK response of the BYE to UE B.

Step S611, the AS sends the BYE request to UE B, releasing the session between UE B and UE A.

Step S612, UE B returns the 200 OK response of the BYE to the AS, and UE B exits the conversation with UE A.

Step S613, the AS initiates a REINVITE request (i.e., transfer request) toward UE C, not carrying media information.

Step S614, UE C returns a 200 OK response (i.e., transfer request answer) of the REINVITE to the AS, carrying the media information about UE C.

Step S615, the AS initiates the REINVITE request toward UE A, carrying the media information about UE C obtained from step S614.

Step S616, UE A returns the 200 OK response of the REINVITE to the AS, carrying the media information about UE A.

Step S617, the AS sends ACK acknowledgement information to UE C, carrying the media information about UE A obtained from step S616.

Step S618, the AS sends the ACK acknowledgement information to UE A, not carrying media information. By then, UE C and UE A complete media negotiation, entering a conversation state.

In the consultant transfer service in the above-mentioned embodiment, the application server (AS) records user conversation information without requiring the terminal to support REFER messages, which is a B2B (Back to Back) call service. In this service, the service user is merely required to dial a specific service code (i.e., the above-mentioned consultant transfer service code) plus the number of the target user, and after performing conversation inquiry with the target user, if the target user agrees, the conversation of the service user can be handed over to the target user. This service supports all the terminals in the existing networks (narrow band terminals have to be anchored to the IMS or the NGN), which can not only be realized in the IMS network but can also be realized in the NGN network. With the rising of 3G (3rd Generation) network and the convergence of the CS (Circuit Switch) and PS (Packet Switched) networks, this service has a very broad development and usage space.

### Embodiment 2

This embodiment provides an application server, referring to Fig. 7, this application server includes:
a signaling forwarding module **72** configured to forward conversation negotiation signaling between a service user and a target user, wherein the service user is a user subscribing to the consultant transfer service, and the service user is in a conversation holding state with a first user; the conversation negotiation signaling carries a consultant transfer service identifier;
a transfer determination module **74** coupled with the signaling forwarding module **72** and configured to, according to the consultant transfer service identifier, determine, after receiving a conversation hang-up request form the service user, that the target user agrees to establish conversation with the first user;
a conversation transfer module **76** coupled with the transfer determination module **74** and configured to transfer the conversation of the first user to the target user according to the determination result of the transfer determination module **74**.

The signaling forwarding module **72** includes: a call request receiving unit configured to receive a call request message sent by the service user to the target user, the call request message carrying a consultant transfer service code and the number of the target user; a call unit configured to extract the consultant transfer service code and the number of the target user from the call request message, record the consultant transfer service code and call the target user.

The consultant transfer service code may be added in a specific location of the field where the number of the target user is located, for example, the consultant transfer service code is added before or after the number of the target user.

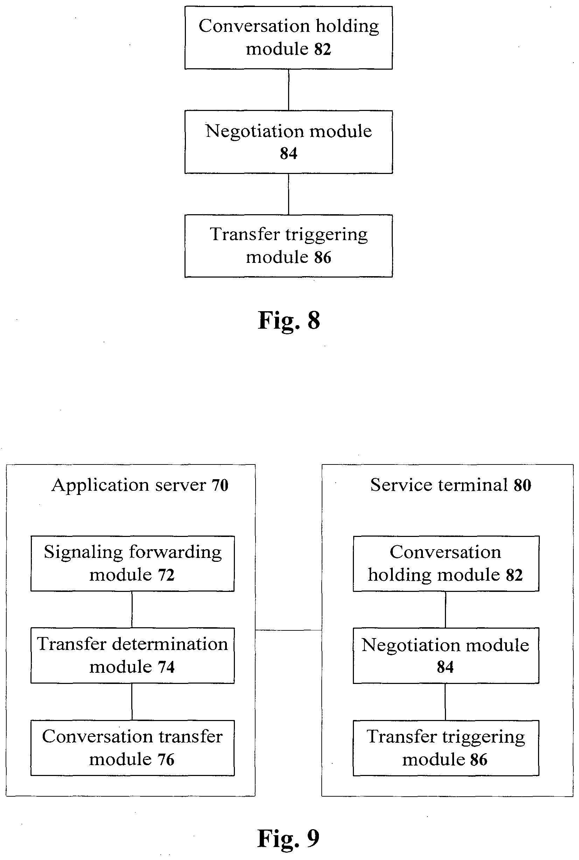

This embodiment also provides a service terminal, referring to Fig. 8, this service terminal includes:
a conversation holding module **82** configured to, during the conversation with a first user, place the first user to be in a conversation holding state, wherein the service terminal is a terminal subscribing to the consultant transfer service;
a negotiation module **84** coupled with the conversation holding module **82** and configured to perform conversation negotiation with a target user and notify an application server that the conversation negotiation is consultant transfer service negotiation;
a transfer triggering module **86** coupled with the negotiation module **84** and configured to, when determining that the second user agrees to transfer a service according to the result of the conversation negotiation of the negotiation module **84**, respectively hang up the conversations with the first user and the second user to trigger the application server to transfer the conversation of the first user to the target user.

The negotiation module **84** includes: a call request sending unit configured to send a call request message to the target user, the call request message carrying a consultant transfer service code for notifying the application server that the conversation negotiation is consultant transfer service negotiation; an inquiry unit configured to, after entering a conversation state with the target user, inquiry whether the target user agrees to be in conversation with the first user.

This embodiment also provides a consultant transfer system, referring to Fig. 9, this system includes an application server **70** and a service terminal **80** mentioned above, wherein the functions of the application server **70** and the service terminal **80** are the same as the above description, which will not be described here.

The system provided in this embodiment can be used for realizing the method in embodiment 1, the particular implementation of which will not be described in detail here.

In this embodiment, during the negotiation conversation process of a service user and a target user, an application service is notified that a consultant transfer service is undergoing, the consultant transfer service can be realized without requiring a service terminal to support REFER messages, the problem of the high limitation of the consultant transfer service is solved, the application scope of the consultant transfer service is increased, and the system features are enhanced.

It can be seen from the above description that, in the above embodiment, during the negotiation conversation process of a service user and a target user, an application service is notified that a consultant transfer service is undergoing, the consultant transfer service can be realized without requiring a service terminal to support REFER messages, the problem of the high limitation of the consultant transfer service is solved, the application scope of the consultant transfer service is increased, and the system features are enhanced.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. The appended claims define the scope of the protection of the present invention.

## Claims

1. A consultant transfer method, comprising:
an application server forwarding (S202) conversation negotiation signaling between a service user equipment (UE B) and a target user equipment (UE C), wherein the service user equipment is a user equipment subscribing to a consultant transfer service, and the service user equipment is in a conversation holding state with a first user equipment (UE A); the conversation negotiation signaling carries a consultant transfer service identifier;
according to the consultant transfer service identifier, the application server determining, after receiving a conversation hang-up request from the service user equipment, that the target user equipment agrees to establish a conversation with the first user equipment (S204);
the application server transferring a conversation of the first user equipment to the target user equipment (S206);
wherein the application server forwarding the conversation negotiation signaling between the service user equipment and the target user equipment (S202) comprises:
the application server receiving a call request message sent by the service user equipment to the target user equipment wherein the call request message carries a consultant transfer service code for notifying the application server that the conversation negotiation is consultant transfer service negotiation and a number of the target user equipment;
the application server extracting the consultant transfer service code and the number of the target user equipment from the call request message, recording the consultant transfer service code and calling the target user equipment.

2. The method according to claim 1, where the consultant transfer service code is added in a specific location of a field where the number of the target user equipment is located.

3. The method according to claim 1, where the application server transferring the conversation of the first user equipment to the target user equipment (S206) comprises:
the application server cutting off the conversation between the service user equipment and the target user equipment and the conversation between the service user equipment and the user equipment and establishing a conversation connection between the first user equipment and the target user equipment.

4. The method according to claim 1, where
before the application server forwarding conversation negotiation signaling between the service user equipment and the target user equipment, the method further comprises: during a conversation between a service user equipment and a first user equipment, the service user placing the first user equipment in a conversation holding state; the service user equipment performing conversation negotiation with the target user equipment and notifying the application server that the conversation negotiation is consultant transfer service negotiation (S302, S304);
before according to the consultant transfer service identifier, the application server determining, after receiving a conversation hang-up request from the service user equipment, that the target user equipment agrees to establish a conversation with the first user equipment, the method comprises: when the service user equipment determines that the target user equipment agrees a transfer service according to a result of the conversation negotiation, the service user equipment respectively hanging up conversations with the first user equipment and the target user equipment to trigger the application server to transfer a conversation of the first user to the target user (S306);
wherein the service user equipment performing the conversation negotiation with the target user equipment and notifying the application server that the conversation negotiation is consultant transfer service negotiation (S304) comprises:
the service user equipment sending the call request message to the target user equipment;
after entering a conversation state with the target user, the service sending the conversation hang-up request to the application server.

5. The method according to claim 4, where the consultant transfer service code is added in a specific location of a field where a number of the target user equipment user is located.

6. An application server, comprising:
a signaling forwarding module (72) configured to forward conversation negotiation signaling between a service user equipment and a target user equipment, wherein the service user equipment is a user equipment subscribing to a consultant transfer service, and the service user equipment is in a conversation holding state with a first user equipment; the conversation negotiation signaling carries a consultant transfer service identifier;
a transfer determination module (74) configured to, according to the consultant transfer service identifier, determine, after receiving a conversation hang-up request from the service user equipment, that the target user equipment agrees to establish a conversation with the first user equipment;
a conversation transfer module (76) configured to transfer a conversation of the first user equipment to the target user equipment according to a determination result of the transfer determination module (74);
wherein the signaling forwarding module (72) comprises:
a call request receiving unit configured to receive a call request message sent by the service user equipment to the target user equipment, wherein the call request message carries a consultant transfer service code and a number of the target user equipment;
a call unit configured to extract the consultant transfer service code and the number of the target user equipment from the call request message, record the consultant transfer service code and call the target user equipment.

7. A service user equipment, comprising:
a conversation holding module (82) configured to, during a conversation between a service user equipment and a first user equipment, place the first user equipment in a conversation holding state, wherein the service user equipment is a user equipment subscribing to a consultant transfer service;
a negotiation module (84) configured to perform conversation negotiation with a target user equipment and notify an application server that the conversation negotiation is consultant transfer service negotiation;
a transfer triggering module (86) configured to, when determining that the target user equipment agrees a transfer service according to a result of the conversation negotiation, respectively hang up conversations with the first user equipment and the target user equipment to trigger the application server to transfer a conversation of the first user equipment to the target user equipment;
wherein the negotiation module (84) comprises:
a call request sending unit configured to send a call request message to the target user equipment, wherein the call request message carries a consultant transfer service code for notifying the application server that the conversation negotiation is consultant transfer service negotiation;
an inquiry unit configured to, after entering a conversation state with the target user equipment, send a conversation hang-up request to the application server, wherein the conversation hang-up request is used for indicating the result of the conversation negotiation is that the target user equipment agrees the transfer service.

8. A consultant transfer system, comprising an application server (70) according to claim 6 and further comprising a service user equipment (80) according to claim 7.

## Patentansprüche

1. Beratertransferverfahren, umfassend:
einen Anwendungsserver zur Weiterleitung (S202) einer Gesprächsaushandlungssignalgebung zwischen einem Dienstbenutzergerät (BG B) und einem Zielbenutzergerät (BG C), wobei das Dienstbenutzergerät ein Benutzergerät ist, das einen Beratertransferdienst abonniert, und sich das Dienstbenutzergerät in einem Zustand befindet, in dem ein Gespräch mit einem ersten Benutzergerät (BG A) gehalten wird;
wobei die Gesprächsaushandlungssignalgebung einen Bezeichner für einen Beratertransferdienst trägt;
wobei, gemäß dem Bezeichner für einen Beratertransferdienst, der Anwendungsserver ermittelt, nachdem er eine Anforderung zum Trennen des Gesprächs vom Dienstbenutzergerät empfängt, dass das Zielbenutzergerät zustimmt, ein Gespräch mit dem ersten Benutzergerät herzustellen (S204);
der Anwendungsserver ein Gespräch des ersten Benutzergeräts an das Zielbenutzergerät (S206) überträgt;
wobei der Anwendungsserver, der die Gesprächsaushandlungssignalgebung zwischen dem Dienstbenutzergerät und dem Zielbenutzergerät (S202) weiterleitet, folgendes umfasst:
den Anwendungsserver, der eine Anrufanforderungsnachricht empfängt, die das Dienstbenutzergerät an das Zielbenutzergerät sendet, wobei die Anrufanforderungsnachricht einen Beratertransfer-Dienstcode trägt, um den Anwendungsserver zu benachrichtigen, dass es sich bei der Gesprächsaushandlung um Beratertransfer-Dienstaushandlung handelt, und um eine Nummer des Zielbenutzergeräts;
den Anwendungsserver, der den Beratertransfer-Dienstcode und die Nummer des Zielbenutzergeräts aus der Anrufanforderungsnachricht extrahiert, den Beratertransfer-Dienstcode aufzeichnet und das Zielbenutzergerät anruft.

2. Verfahren nach Anspruch 1, wo der Beratertransfer-Dienstcode an einer bestimmten Stelle eines Felds hinzugefügt ist, wo sich die Nummer des Zielbenutzergeräts befindet.

3. Verfahren nach Anspruch 1, wobei der Anwendungsserver, der das Gespräch des ersten Benutzergeräts an das Zielbenutzergerät (S206) überträgt, umfasst:
den Anwendungsserver, der das Gespräch zwischen dem Dienstbenutzergerät und dem Zielbenutzergerät und das Gespräch zwischen dem Dienstbenutzergerät und dem Benutzergerät abschneidet und eine Gesprächsverbindung zwischen dem ersten Benutzergerät und dem Zielbenutzergerät herstellt.

4. Verfahren nach Anspruch 1, wobei,
bevor der Anwendungsserver eine Gesprächsaushandlungssignalgebung zwischen dem Dienstbenutzergerät und dem Zielbenutzergerät weiterleitet, das Verfahren außerdem Folgendes umfasst: während eines Gesprächs zwischen einem Dienstbenutzergerät und einem ersten Benutzergerät versetzt der Dienstbenutzer das erste Benutzergerät in einen Zustand, in dem das Gespräch gehalten wird; das Dienstbenutzergerät führt die Gesprächsaushandlung mit dem Zielbenutzergerät durch und benachrichtigt den Anwendungsserver, dass es sich bei der Gesprächsaushandlung um Beratertransfer-Dienstaushandlung handelt (S302, S304);
bevor gemäß dem Bezeichner des Beratertransferdienstes der Anwendungsserver ermittelt, nachdem er eine Anforderung zum Trennen des Gesprächs vom Dienstbenutzergerät empfängt, dass das Zielbenutzergerät zustimmt, ein Gespräch mit dem ersten Benutzergerät herzustellen, das Verfahren umfasst: wenn das Dienstbenutzergerät ermittelt, dass das Zielbenutzergerät einem Transferdienst gemäß einem Ergebnis der Gesprächsaushandlung zustimmt, das Dienstbenutzergerät jeweils Gespräche mit dem ersten Benutzergerät und dem zweiten Benutzergerät trennt, um auszulösen, dass der Anwendungsserver ein Gespräch des ersten Benutzers an den Zielbenutzer überträgt (S306);
wobei das Dienstbenutzergerät die Gesprächsaushandlung mit dem Zielbenutzergerät durchführt und den Anwendungsserver benachrichtigt, dass es sich bei der Gesprächsaushandlung um Beratertransfer-Dienstaushandlung (S304) handelt, die folgendes umfasst:
das Dienstbenutzergerät, das die Anrufanforderungsnachricht an das Zielbenutzergerät sendet;
nach dem Eingeben eines Gesprächsstatus mit dem Zielbenutzer sendet der Dienst die Anforderung zum Trennen des Gesprächs an den Anwendungsserver.

5. Verfahren nach Anspruch 4, wobei der Beratertransfer-Dienstcode an einer bestimmten Stelle eines Felds hinzugefügt ist, wo sich eine Nummer des Zielbenutzergeräts befindet.

6. Anwendungsserver, umfassend:
ein Signalweiterleitungsmodul (72), das ausgestaltet ist,
Gesprächsaushandlungssignalgebung zwischen einem Dienstbenutzergerät und einem Zielbenutzergerät weiterzuleiten, wobei das Dienstbenutzergerät ein Benutzergerät ist, das einen Beratertransferdienst abonniert, und das Dienstbenutzergerät sich in einem Zustand befindet, in dem ein Gespräch mit einem ersten Benutzergerät gehalten wird;
die Gesprächsaushandlungssignalgebung trägt einen Bezeichner für einen Beratertransferdienst;
ein Transferermittlungsmodul (74), das ausgestaltet ist, um gemäß dem Bezeichner des Beratertransferdienstes zu ermitteln, nachdem er eine Anforderung zum Trennen des Gesprächs vom Dienstbenutzergerät empfängt, dass das Zielbenutzergerät zustimmt, ein Gespräch mit dem ersten Benutzergerät herzustellen;
ein Gesprächstransfermodul (76), das ausgestaltet ist, um ein Gespräch des ersten Benutzergeräts gemäß eines Ermittlungsergebnisses des Transferermittlungsmoduls (74) an das Zielbenutzergerät zu übertragen;
wobei das Signalweiterleitungsmodul (72) folgendes umfasst:
eine Einheit, die Rufanforderungen empfängt und ausgestaltet ist, eine Anrufanforderungsnachricht zu empfangen, die das Dienstbenutzergerät an das Zielbenutzergerät sendet, wobei die Anrufanforderungsnachricht einen Beratertransfer-Dienstcode und eine Nummer des Zielbenutzergeräts trägt;
eine Anrufeinheit, die ausgestaltet ist, den Beratertransfer-Dienstcode und die Nummer des Zielbenutzergeräts aus der Anrufanforderungsnachricht zu extrahieren, den Beratertransfer-Dienstcode aufzuzeichnen und das Zielbenutzergerät anzurufen.

7. Dienstbenutzergerät, umfassend:
ein Modul zum Halten des Gesprächs (82), das ausgestaltet ist, um während eines Gesprächs zwischen einem Dienstbenutzergerät und einem ersten Benutzergerät das erste Gerät in einen Zustand zu versetzen, in dem das Gespräch gehalten wird, wobei das Dienstbenutzergerät ein Benutzergerät ist, das einen Beratertransferdienst abonniert;
ein Aushandlungsmodul (84), das ausgestaltet ist, Gesprächsaushandlung mit einem Zielbenutzergerät durchzuführen und einen Anwendungsserver zu benachrichtigen, dass es sich bei der Gesprächsaushandlung um Beratertransfer-Dienstaushandlung handelt;
ein Transferauslösemodul (86), das ausgestaltet ist, wenn es ermittelt, dass das Zielbenutzergerät einem Transferdienst gemäß einem Ergebnis der Gesprächsaushandlung zustimmt, jeweils Gespräche mit dem ersten Benutzergerät und dem Zielbenutzergerät trennt, um auszulösen, dass der Anwendungsserver ein Gespräch des ersten Benutzergeräts an das Zielbenutzergerät übertragt;
wobei das Aushandlungsmodul (84) folgendes umfasst:
eine Einheit, die Rufanforderungen sendet und ausgestaltet ist, eine Anrufanforderungsnachricht an das Zielbenutzergerät zu senden, wobei die Anrufanforderungsnachricht einen Beratertransfer-Dienstcode trägt, um den Anwendungsserver zu benachrichtigen, dass es sich bei der Gesprächsaushandlung um Beratertransfer-Dienstaushandlung handelt;
eine Anfrageeinheit, die ausgestaltet ist, um nach dem Eingeben eines Gesprächsstatus mit dem Zielbenutzergerät eine Anforderung zum Trennen des Gesprächs an den Anwendungsserver zu senden, wobei die Anforderung zum Trennen des Gesprächs verwendet wird, um anzuzeigen, dass das Ergebnis der Gesprächsaushandlung lautet, dass das Zielbenutzergerät dem Transferdienst zustimmt.

8. Beratertransfersystem, umfassend einen Anwendungsserver (70) nach Anspruch 6 und außerdem umfassend ein Dienstbenutzergerät (80) nach Anspruch 7.

## Revendications

1. Procédé de transfert de consultant, comprenant :
un serveur d'applications transmettant (S202) une signalisation de négociation de conversation entre un équipement utilisateur de service (UE B) et un équipement utilisateur cible (UE C), dans lequel l'équipement utilisateur de service est un équipement utilisateur souscrivant à un service de transfert de consultant, et l'équipement utilisateur de service est dans un mode de conversation avec un équipement premier utilisateur (UE A) ;
la signalisation de négociation de conversation transporte un identifiant de service de transfert ;
selon l'identifiant du service de transfert de consultant, le serveur d'applications déterminant, après réception d'une requête de déconnexion de conversation de l'équipement utilisateur de service, que l'équipement utilisateur cible accepte d'établir une conversation avec l'équipement premier utilisateur (S204) ;
le serveur d'applications transférant une conversation de l'équipement premier utilisateur à l'équipement utilisateur cible (S206) ;
dans lequel le serveur d'applications transmettant la signalisation de négociation de conversation entre l'équipement utilisateur de service et
l'équipement utilisateur cible (S202) comprend :
le serveur d'applications recevant un message de requête d'appel envoyé par l'équipement utilisateur de service à l'équipement utilisateur cible dans lequel le message de requête d'appel transporte un code de service de transfert de consultant pour notifier le serveur d'applications que la négociation de conversation est une négociation de service de transfert de consultant et un numéro de l'équipement utilisateur cible ;
le serveur d'applications extrayant le code de service de transfert de consultant et le numéro de l'équipement utilisateur cible du message de requête d'appel, enregistrant le code de service de transfert de consultant et appelant l'équipement utilisateur cible.

2. Procédé selon la revendication 1, où le code de service de transfert de consultant est ajouté dans un emplacement particulier d'un champ où le numéro de l'équipement utilisateur cible est situé.

3. Procédé selon la revendication 1, où le serveur d'applications transférant la conversation de l'équipement premier utilisateur à l'équipement utilisateur cible (S206) comprend :
le serveur d'applications coupant la conversation entre l'équipement utilisateur de service et l'équipement utilisateur cible et la conversation entre l'équipement utilisateur de service et l'équipement utilisateur et établissant une connexion de conversation entre l'équipement premier utilisateur et l'équipement utilisateur cible.

4. Procédé selon la revendication 1, où avant le serveur d'applications transmettant une signalisation de négociation de conversation entre l'équipement utilisateur de service et l'équipement utilisateur cible, le procédé comprend en outre : pendant une conversation entre un équipement utilisateur de service et un équipement premier utilisateur,
l'utilisateur de service plaçant l'équipement premier utilisateur dans un mode de conversation ; l'équipement utilisateur de service effectuant une négociation de conversation avec l'équipement utilisateur cible et notifiant le serveur d'applications que la négociation de conversation est une négociation de service de transfert de consultant (S302, S304) ;
avant, selon l'identifiant du service de transfert de consultant, le serveur d'applications déterminant, après réception d'une requête de déconnexion de conversation de l'équipement utilisateur de service, que l'équipement utilisateur cible accepte d'établir une conversation avec l'équipement premier utilisateur, le procédé comprend : quand l'équipement utilisateur de service détermine que l'équipement utilisateur cible accepte un service de transfert selon un résultat de la négociation de conversation, l'équipement utilisateur de service respectivement déconnectant des conversations avec l'équipement premier utilisateur et l'équipement utilisateur cible pour déclencher le serveur d'applications pour transférer une conversation du premier utilisateur à l'utilisateur cible (S306) ;
dans lequel l'équipement utilisateur de service effectuant la négociation de conversation avec l'équipement utilisateur cible et notifiant le serveur d'applications que la négociation de conversation est une négociation de service de transfert de consultant (S304) comprend :
l'équipement utilisateur de service envoyant le message de requête d'appel à l'équipement utilisateur cible ;
après être entré dans un mode de conversation avec l'utilisateur cible, le service envoyant la requête de déconnexion de conversation au serveur d'applications.

5. Procédé selon la revendication 4, où le code de service de transfert de consultant est ajouté dans un emplacement particulier d'un champ où un numéro de l'équipement utilisateur cible est situé.

6. Serveur d'applications, comprenant :
un module de transmission de signalisation (72) configuré pour transmettre une signalisation de négociation de conversation entre un équipement utilisateur de service et un équipement utilisateur cible, dans lequel l'équipement utilisateur de service est un équipement utilisateur souscrivant à un service de transfert de consultant, et l'équipement utilisateur de service est dans un mode de conversation avec un équipement premier utilisateur ;
la signalisation de négociation de conversation transporte un identifiant de service de transfert ;
un module de détermination de transfert (74) configuré pour, selon l'identifiant du service de transfert de consultant, déterminer, après réception d'une requête de déconnexion de conversation de l'équipement utilisateur de service, que l'équipement utilisateur cible accepte d'établir une conversation avec l'équipement premier utilisateur ;
un module de transfert de conversation (76) configuré pour transférer une conversation de l'équipement premier utilisateur à l'équipement utilisateur cible selon un résultat de détermination du module de détermination de transfert (74) ;
dans lequel le module de transmission de signalisation (72) comprend :
une unité de réception de requête d'appel configurée pour recevoir un message de requête d'appel envoyé par l'équipement utilisateur de service à l'équipement utilisateur cible, dans lequel le message de requête d'appel transporte un code de service de transfert de consultant et un numéro de l'équipement utilisateur cible ;
une unité d'appel configurée pour extraire le code de service de transfert de consultant et le numéro de l'équipement utilisateur cible du message de requête d'appel, enregistrer le code de service de transfert de consultant et appeler le l'équipement utilisateur cible.

7. Équipement utilisateur de service, comprenant :
un module de conversation (82) configuré pour, durant une conversation entre un équipement utilisateur de service et un équipement premier utilisateur, placer l'équipement premier utilisateur dans un mode de conversation, dans lequel l'équipement utilisateur de service est un équipement utilisateur souscrivant à un service de transfert de consultant ;
un module de négociation (84) configuré pour effectuer une négociation de conversation avec un équipement utilisateur cible et notifier un serveur d'applications que la négociation de conversation est une négociation de service de transfert de consultant ;
un module de déclenchement de transfert (86) configuré pour, lors de la détermination que l'équipement utilisateur cible accepte un service de transfert selon un résultat de la négociation de conversation, respectivement raccrocher des conversations avec l'équipement premier utilisateur et l'équipement utilisateur cible pour déclencher le serveur d'applications pour transférer une conversation de l'équipement premier utilisateur à l'équipement utilisateur cible ;
dans lequel le module de négociation (84) comprend :
une unité d'envoi d'une requête d'appel configurée pour envoyer un message de requête d'appel à l'équipement utilisateur cible, dans lequel le message de requête d'appel transporte un code de service de transfert de consultant pour notifier le serveur d'applications que la négociation de conversation est une négociation de service de transfert de consultant ;
une unité de demande configurée pour, après être entrée dans un mode de conversation avec l'équipement utilisateur cible, envoyer une requête de déconnexion de conversation au serveur d'applications, dans lequel la requête de déconnexion de conversation est utilisée pour indiquer que le résultat de la négociation de conversation est que l'équipement utilisateur cible accepte le service de transfert.

8. Système de transfert de consultant, comprenant un serveur d'applications (70) selon la revendication 6 et comprenant en outre un équipement utilisateur de service (80) selon la revendication 7.
